# EUROPEAN PATENT APPLICATION

(11) **EP 4 837 728 A1**
(43) Date of publication of application: **11.11.2026**
(21) Application number: 25774870.7
(22) Date of filing: 26.02.2025
(51) Int. Cl.: B29C 65/00, B29C 51/08, B29C 51/26, B29C 59/14, B29D 99/00, H01M 50/105

(54) **SECONDARY BATTERY POUCH MANUFACTURING APPARATUS AND MANUFACTURING METHOD**

(30) Priority: 22.03.2024 KR 20240039514
(71) Applicant: LG Energy Solution, Ltd., Seoul 07335 (KR)
(72) Inventor: KIM, Wan Ju, Daejeon 34122 (KR); LEE, Ji Hoon, Daejeon 34122 (KR); KIM, Soo Young, Daejeon 34122 (KR)
(74) Representative: Plasseraud IP
(86) International application number: PCT/KR2025/002651
(87) International publication number: WO 2025/198208

(57) **Abstract**

The present invention relates to a secondary battery pouch manufacturing method, and more specifically, relates to a secondary battery pouch manufacturing method and a secondary battery pouch manufacturing device, capable of organically and efficiently performing plasma surface treatment.

According to one example of the present invention, a secondary battery pouch manufacturing method may be provided, which comprises: a transfer step of supplying a pouch sheet by transferring and stopping it from a pouch roll at a predetermined cycle using an unwinder; a forming step of forming a cup, in which an electrode assembly is accommodated, by forming the pouch sheet in a stopped state after being transferred through the transfer step; and a surface treatment step of performing plasma surface treatment on the pouch sheet in a stopped state after being transferred through the transfer step.

## Description

### Technical Field

The present invention relates to a secondary battery pouch manufacturing method, and more specifically, relates to a secondary battery pouch manufacturing method and a secondary battery pouch manufacturing device, capable of organically and efficiently performing plasma surface treatment.

This application claims the benefit of priority based on Korean Patent Application No. 10-2024-0039514 dated March 22, 2024, the disclosure of which is incorporated herein by reference in its entirety.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer Battery, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 to 37V) unit cell among existing secondary batteries, and excellent energy densities, so that they can have characteristics optimized for mobile devices.

Lithium secondary batteries can be manufactured as pouch-type secondary batteries by encapsulating a battery cell with a pouch which is an aluminum encapsulation material.

The pouch-type secondary battery may comprise a battery cell accommodated in a pouch as an encapsulating material, a lead tab electrically connected to electrode tabs of electrodes provided in the battery cell to be drawn out to the outside of the pouch, and an insulating film electrically insulating the lead tab. Particularly, the pouch may perform a function of sealing the battery cell accommodated therein by heat-fusing the inner surface of the pouch with the insulating film formed on the lead tab of the battery cell, or directly heat-fusing the inner surface of the pouch with the inner surface of the pouch. The insulating film is generally a polypropylene (PP) film.

The pouch sealing performs a function of sealing a certain space accommodating an electrolyte inside the pouch. When the battery cell is repeatedly charged and discharged, gas is generated to increase the pressure inside the pouch, and for this reason, the pouch sealing requires high strength.

Meanwhile, upon sealing the pouch by heat fusion, the polypropylene (PP) film is melted and spread to be bonded. The polypropylene film does not only bond the pouch, but also separates a metal layer, such as aluminum, of the pouch from the electrolyte, thereby preventing corrosion of the metal layer, and preventing current from flowing into the pouch to increase resistance.

The applicants have proposed a manufacturing device and a manufacturing method for performing plasma surface treatment on a pouch surface during transfer through Korean Patent Application No. 10-2023-0042329 (hereinafter, referred to as "Prior Patent 1") and Korean Patent Application No. 10-2023-0046322 (hereinafter, referred to as "Prior Patent 2").

In Prior Patent 1, it can be confirmed that the pouch sealing strength can be increased by irradiating the pouch surface with plasma gas together with carrier gas. Since the plasma gas is generated before being irradiated through a plasma head, it was named indirect plasma.

In Prior Patent 2, it can be confirmed that the pouch sealing strength can be increased and the temporary bonding strength can be reduced, by irradiating the pouch surface with plasma gas. Since the gas irradiated through a plasma head is converted into plasma and irradiated to the pouch surface, it was named direct plasma.

For the sealing strength improvement or the temporary bonding strength reduction through plasma surface treatment, the plasma surface treatment strength must be appropriate. As one example, when the transfer speed of the pouch is approximately 60 mm/s, the desired plasma intensity can be implemented.

The unit pouch, which is the sealing material of the unit secondary battery, can be manufactured by cutting the pouch sheet transferred through the pouch roll into a unit length. In the actual pouch manufacturing process, the transfer speed of the pouch sheet is approximately 800 mm/s, so that it is very difficult to implement the desired plasma strength. This is because the time for which the surface of the pouch is exposed to the plasma environment is very short.

Therefore, it is not easy to apply plasma surface treatment at the site where the secondary battery is manufactured by manufacturing the unit pouch from the pouch roll, rather than the manufacturing site of the pouch roll itself.

### Disclosure

### Technical Problem

Through one example of the present invention, it is intended to provide a secondary battery pouch manufacturing device and a secondary battery manufacturing method, capable of applying plasma surface treatment in a unit pouch manufacturing process that is continuously performed.

Through one example of the present invention, it is intended to provide a secondary battery pouch manufacturing device and a secondary pouch manufacturing method, capable of performing plasma surface treatment by utilizing a time during which a forming process of forming a cup on a pouch sheet is performed.

Through one example of the present invention, it is intended to prevent waste of a plasma material by providing a plasma device capable of performing plasma treatment at a local location for a desired period.

Through one example of the present invention, it is intended to provide a secondary battery pouch manufacturing device and a secondary battery pouch manufacturing method, capable of flexibly responding to changes in product size by allowing a plasma head and a guide block to be horizontally movable.

Through one example of the present invention, it is intended to provide a secondary battery pouch manufacturing device and a secondary battery pouch manufacturing method, capable of performing plasma treatment at an accurate location, as a guide block supports a pouch sheet while rising to be in contact with an outer surface of a cup of the pouch sheet.

### Technical Solution

In order to achieve the above-described purpose, according to one example of the present invention, a secondary battery pouch manufacturing method may be provided, which comprises: a transfer step of supplying a pouch sheet by transferring and stopping it from a pouch roll at a predetermined cycle using an unwinder; a forming step of forming a cup, in which an electrode assembly is accommodated, by forming the pouch sheet in a stopped state after being transferred through the transfer step; and a surface treatment step of performing plasma surface treatment on the pouch sheet in a stopped state after being transferred through the transfer step.

The forming step may be performed on the pouch sheet on which the surface treatment step has been performed, or the surface treatment step may be performed on the pouch sheet on which the forming step has been performed.

The plasma surface treatment is preferably performed on an outer side region near the edge of the cup where the pouch is sealed by heat pressurization. That is, it is preferable that the plasma surface treatment is performed on a region where the pouch is heat-fused in a subsequent process.

The plasma surface treatment may be performed through a plasma device. The plasma device may comprise a plasma head and a guide block.

The plasma head may be provided to face a surface on which the plasma surface treatment is performed, and the guide block may be provided to face a back surface of the surface on which the plasma surface treatment is performed. The plasma head may be provided to face the guide block.

The plasma surface treatment may be performed in a state where the guide block is in contact with and supports the pouch sheet. It is preferable that the plasma surface treatment is performed only on a specific portion supported by the guide block.

The manufacturing method is preferably performed as in-line processes. The plasma surface treatment is performed only on a local portion supported by the guide block in a state where the transfer of the pouch sheet has been stopped, whereby efficient and accurate plasma surface treatment can be performed.

It is preferable that the plasma surface treatment is performed only on an upper or lower surface of the pouch sheet covered and being in contact with each other upon sealing of the pouch. That is, it is preferable that the plasma surface treatment is not performed on the surface forming the outer surface of the pouch in the secondary battery after the manufacturing is completed.

It is preferable that the plasma surface treatment is also performed on an inside region near the edge of the cup. That is, the plasma surface treatment may also be performed on an adjacent region where polypropylene molten in a sealing region flows in and is fixed.

The sealing region is formed on the edge portion of the cup. Therefore, the sealing region is formed on the outside based on the cup outside surface.

The guide block supports the pouch sheet while rising to be in contact with the cup outside surface of the pouch sheet, whereby the plasma surface treatment may be performed. Therefore, the plasma treatment may be performed at an accurate position. That is, the guide block approaches an accurate position based on the position of the cup and supports the pouch sheet, whereby the plasma surface treatment may be performed.

The guide block may be provided as a pair on the left and right, and the gap between the guide blocks may be controlled to be variable. One side guide block and the other side guide block may be independently horizontally moved. In addition, the guide blocks may be moved up and down.

In the forming step, two cups are formed side by side in the width direction of the pouch sheet, and the cup may be formed in a rectangular shape having short sides in the width direction of the pouch sheet and long sides in the length direction of the pouch sheet.

The sealing at the short side may be called top sealing, and the sealing at the long side may be called side sealing.

The plasma surface treatment may be performed on at least one of an edge outside region of the short side and an edge outside region of the long side.

It is preferable that after the surface treatment step, a cutting step of cutting the pouch sheet in a stopped state after being transferred through the transfer step into unit pouches is included.

That is, after the forming process and the surface treatment process are performed on the continuously connected pouch sheet, the unit pouch can be manufactured only in the cutting step.

It is preferable that the forming step, the surface treatment step, and the cutting step are performed simultaneously. That is, it is preferable that the forming process, the surface treatment process, and the cutting process are performed at different locations within the period in which the pouch sheet is transferred, and then stopped. After the forming process, the surface treatment process, and the cutting process are all completed, the pouch sheet may be transferred again. The pouch sheet may be transferred by 1 pitch corresponding to the length of the unit pouch, and then stopped.

In order to achieve the above-described purpose, according to one example of the present invention, a secondary battery pouch manufacturing device may be provided, which is characterized by comprising an unwinder providing a pouch sheet from a pouch roll by transferring and stopping it at a predetermined cycle; a forming device forming a cup in which an electrode assembly is accommodated by forming the pouch sheet in a stopped state; and a plasma device performing surface treatment by irradiating the pouch sheet in a stopped state with plasma.

The forming device and the plasma device may be located at the rear end of the unwinder, and the forming device may be located at the front or rear end of the plasma device.

The plasma device may comprise a plasma head irradiating plasma toward one surface of the pouch sheet; and a guide block provided to support the other surface of the pouch sheet upon the plasma irradiation and to be spaced apart from the other surface of the pouch sheet upon completion of the plasma irradiation.

The plasma head and the guide block may form one pair, and two pairs of the plasma heads and the guide blocks which are spaced apart from each other in the length direction or width direction of the pouch sheet may be provided. That is, one plasma device may perform plasma surface treatment on both sides of the main body.

A cutting device cutting the pouch sheet, on which the cup is formed and the surface treatment is performed, into unit pouches may be included.

It is preferable that the forming device, the plasma device, and the cutting device are operated at different positions in a stopped state of the pouch sheet.

A feeding device supporting the pouch sheet upon cutting of the pouch sheet through the cutting device and moving the pouch sheet to a cutting position of the cutting device upon cutting completion may be included.

In order to achieve the above-described purpose, according to one example of the present invention, a secondary battery pouch plasma device may be provided, which is characterized by comprising: plasma heads provided on one side and the other side of the upper portion of the pouch sheet, respectively, to irradiate the surface of the pouch sheet with plasma; and guide blocks provided on one side and the other side of the lower portion of the pouch sheet, respectively, and provided to face the plasma heads, wherein the guide block is positioned to be spaced apart from the lower surface of the pouch sheet upon transfer of the pouch sheet, and is provided to support the lower surface of the pouch sheet by rising upon stopping of the pouch sheet, and the plasma head irradiates the upper surface of the pouch sheet with plasma in a state where the guide block supports the lower surface of the pouch sheet.

It is preferable that the plasma device is provided to perform surface treatment by irradiating a portion of the surface of the pouch with plasma.

The plasma head may be provided to approach the upper surface of the pouch sheet by descending upon stopping of the pouch sheet.

It is preferable that the gap between the plasma heads and the gap between the guide blocks are adjustable.

Therefore, it is preferable that the plasma head and the guide block are provided to be capable of vertical movement up and down and horizontal movement left and right. Through this, it is possible to respond flexibly even when the cup size is changed.

### Advantageous Effects

Through one example of the present invention, it is possible to provide a secondary battery pouch manufacturing device and a secondary battery manufacturing method, capable of applying plasma surface treatment in a unit pouch manufacturing process that is continuously performed.

Through one example of the present invention, it is possible to provide a secondary battery pouch manufacturing device and a secondary battery pouch manufacturing method, capable of performing plasma surface treatment by utilizing a forming process period for forming a cup on a pouch sheet.

Through one example of the present invention, it is possible to prevent waste of a plasma material by providing a plasma device capable of performing plasma treatment at a local location for a desired period.

Through one example of the present invention, it is possible to provide a secondary battery pouch manufacturing device and a secondary battery pouch manufacturing method, capable of flexibly responding to changes in product size by allowing a plasma head and a guide block to be horizontally movable.

Through one example of the present invention, it is possible to provide a secondary battery pouch manufacturing device and a secondary battery pouch manufacturing method, capable of performing plasma treatment at an accurate location, as a guide block supports a pouch sheet while rising to be in contact with an outer surface of a cup of the pouch sheet.

Through one example of the present invention, it is possible to provide a secondary battery pouch manufacturing method, applicable to both indirect plasma surface treatment and direct plasma surface treatment.

### Description of Drawings

Figure 1 is a plan view of a unit pouch,
Figure 2 is a flow chart for a pouch manufacturing method according to one example of the present invention,
Figure 3 is a flow chart for a pouch manufacturing method according to another example of the present invention,
Figure 4 illustrates, in a pouch manufacturing device according to one example of the present invention, an appearance before forming,
Figure 5 illustrates, in a pouch manufacturing device according to one example of the present invention, an appearance during forming,
Figure 6 illustrates, in a pouch manufacturing device according to one example of the present invention, an appearance after forming,
Figure 7 illustrates, in a pouch manufacturing device according to one example of the present invention, feeding and cutting appearances of a pouch through a feeding device and a cutting device,
Figure 8 is a perspective diagram of a plasma device applicable to a pouch manufacturing device according to one example of the present invention, and
Figure 9 is a side diagram of the plasma device illustrated in Figure 8.

### Best Mode

Hereinafter, a secondary battery pouch manufacturing device according to one example of the present invention will be described in detail with reference to the attached drawings.

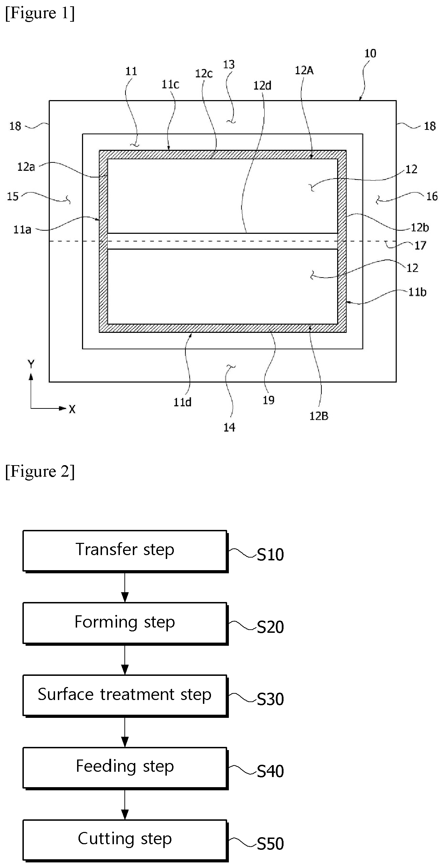

First, referring to Figure 1, a unit pouch (10) that can be manufactured through one example of the present invention will be described in detail. Figure 1 is a plan view of a unit pouch, which may also be referred to as a development diagram of a pouch case.

A pouch sheet may be formed by providing a polypropylene layer on the outer surface and the inner surface of an aluminum thin sheet. That is, if a sealing material is formed with a pouch sheet, the polypropylene on the outer side forms the outer surface of the pouch and the polypropylene on the inner side forms the inner surface of the pouch, so that the aluminum thin sheet is not exposed to the external air and the internal electrolyte. Of course, the resin layers on the outer surface and inner surface may be made of different materials.

As a pouch sheet is continuously transferred and supplied through a pouch roll, and cut to a certain length, it may be manufactured into unit pouches (10). That is, both ends of the unit pouch (10) may be formed through a cutting line (18) cut from the pouch sheet.

The pouch sheet may be cut in a state where it is moved along the x-axis by the length of the unit pouch and stopped, and the width of the unit pouch may be the same as the width (y-axis) of the pouch roll. Therefore, there is no need to cut the width of the pouch sheet separately for manufacturing the unit pouch. Of course, additional cutting may be performed after the pouch case is manufactured.

As illustrated, a partial region of the edge surface (13, 14, 15, 16) of the unit pouch (10) may form a sealing region (11). A cell region (12) in which a battery cell is closely contacted and an electrolyte is filled may be formed in the inner side region of the sealing region (11). Specifically, a partial region of the edge surface (13, 14, 15, 16), as one example, a region surrounding the formed cup (12A, 12B), may be referred to as a sealing region. The cup (12A, 12B) may be formed by being recessed in the z-axis, which is perpendicular to the pouch surface.

Here, the sealing region may be referred to as a region where the pouch surface and the pouch surface are sealed by heat pressurization in a state where they are covered to be in contact with each other.

A folding portion (17) may be formed in the middle of the cell region (12), and after a battery cell is seated on any one cell region (12) of both sides of the folding portion, the up-and-down cell regions (12) and the sealing region (11) may be covered around the folding portion. Thereafter, pouch sealing is performed by heat-fusion of the sealing region (11). The pouch sheet after the pouch sealing is completed may be called a pouch case.

The cell region (12) is formed by the cups (12A, 12B) formed by forming. As one example, the cups (12A, 12B) may be formed by denting the pouch surface through a punch.

The shape of the cup (12A, 12B) corresponds to the shape of the electrode assembly to be accommodated, and is generally a square shape. Figure 1 illustrates one example in which two cups are formed vertically. In addition, cups having left and right short sides (12a, 12b) and up-and-down long sides (12c, 12d) are illustrated. Here, the up, down, left, and right line segments (12a, 12b, 12c, 12d) of the cup (12A, 12B) may be referred as the edges of the cup.

In the case where there is no folding portion, the unit pouch (10) may be the upper casing and the lower casing of the pouch casing. Since the upper casing and the lower casing are positioned to face each other and then sealed, the sealing region (11) appears in the same aspect. However, in the case where there is a folding portion, since sealing is unnecessary due to the folding portion, sealing may be performed in three-line segments, and in the case where there is no folding portion, sealing may be performed in four-line segments.

The adjacent outside region based on the edges (12a, 12b, 12c, 12d) of the cup may be referred to as a sealing region (11a, 11b, 11c, 11d), and the inner side region of the sealing region may be referred to as a temporary bonding region (19). Of course, both the sealing region and the temporary bonding region may be located outside the edge of the cup, and in this case, the sealing region may be located further outside the edge of the cup than the temporary bonding region. The sealing region may be a region where heat pressurization is directly applied to perform sealing, and the temporary bonding region may be referred to as a region into which the polypropylene melted in the sealing region flows, and the temporary bonding region outside the sealing region is unrelated to the problem of sealing strength, and the sealing strength of the temporary bonding region inside the sealing region may be problematic.

Meanwhile, sealing near the up-and-down long sides (12c, 12d) may be called side sealing, and sealing near the left and right short sides (12a, 12b) may be called top sealing. In the side sealing, sealing may be performed in a state where the pouches are in direct contact with each other, and in the top sealing, sealing may be performed by interposing an electrode lead between the pouches.

Therefore, plasma surface treatment may be performed in the sealing region and/or the temporary bonding region where top sealing is performed, and plasma surface treatment may be performed in the sealing region and/or the temporary bonding region where side sealing is performed.

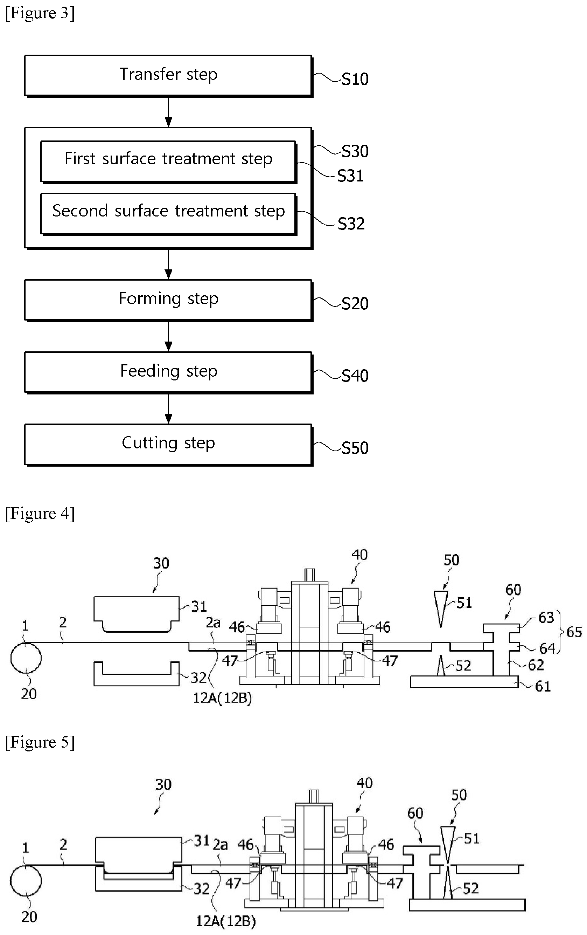

Figures 4 to 6 illustrate examples in which plasma surface treatment is performed in a sealing region and/or a temporary bonding region in top sealing.

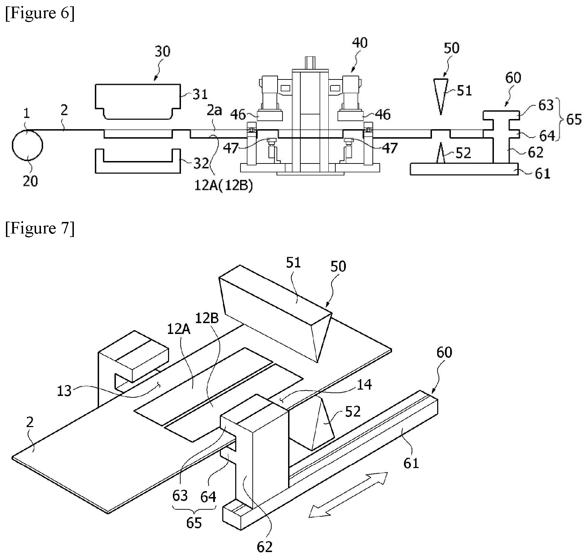

Specifically, Figure 4 illustrates an appearance in which a pouch sheet is transferred, or an appearance in which transfer is stopped, Figure 5 illustrates an appearance in which a forming process, a surface treatment process, and a cutting process are performed in a state where a pouch sheet is stopped, and Figure 6 illustrates an appearance in which a forming process, a surface treatment process, and a cutting process are completed in a state where a pouch sheet is stopped.

According to the present example, it is possible to provide a method and a device for manufacturing a secondary battery pouch, capable of improving the sealing strength by subjecting at least one of the top sealing regions (11a, 11b) and the side sealing regions (11c, 11d) to plasma surface treatment.

In addition, according to the present example, it is possible to provide a method and a device for manufacturing a secondary battery pouch, capable of reducing the temporary bonding strength by subjecting the temporary bonding region near at least one of the top sealing regions (11a, 11b) and the side sealing regions (11c, 11d) to plasma surface treatment.

Particularly, according to the present example, it is possible to perform the plasma surface treatment using a conventional unit pouch manufacturing process. In addition, according to the present example, it is possible to provide a manufacturing method and a manufacturing device, capable of preventing an increase in manufacturing time for plasma surface treatment by performing plasma surface treatment during a conventional unit pouch manufacturing process.

Hereinafter, a manufacturing method and a manufacturing device according to one example of the present invention will be described in detail with reference to Figures 2 to 6.

As shown in Figure 2, according to one example of the present invention, a method for manufacturing a secondary battery pouch comprising a pouch sheet transfer step (S10), a forming step (S20), and a surface treatment step (S30) may be provided.

The pouch sheet transfer step (S10) may be defined as a step of transferring and stopping a pouch sheet (2) from a pouch roll (1) at a predetermined cycle or a predetermined pitch using an unwinder (20) to supply it.

As shown in Figure 4, a pouch roll (1) is mounted on an unwinder (20), and the unwinder rotates, whereby the pouch sheet (2) may be continuously supplied while the pouch sheet is unwound from the pouch roll.

A flat pouch sheet (2) may be formed through a forming device (30). Particularly, it may be formed (S20) to form a cup (12A, 12B) into which an electrode assembly is inserted.

The forming device (30) may form a cup through a lower mold (32) and an upper mold (31). The lower mold (32) may be called a die, and the upper mold (31) may be called a punch. A stripper for fixing the pouch sheet (2) in the forming process may be additionally provided.

The cup (12A, 12B) is formed by being recessed downward from the surface of the pouch sheet (2) and has a space where an electrode assembly is inserted and accommodated. In addition, it is preferable that the cup (12A, 12B) is formed in the central portion of the pouch sheet (2).

The forming process, that is, the forming step (S20), may be performed in a state where the pouch sheet is inserted and stopped between the lower mold (32) and the upper mold (31). Therefore, in order that the forming process is formed, the transfer of the pouch sheet supplied through the unwinder (20) must be temporarily stopped. Then, when the forming process is completed, the transfer of the pouch sheet may be resumed.

Therefore, it is preferable that the transfer step (S10) of the pouch sheet is performed by repeating the transfer and stop of the pouch sheet at a certain cycle or a certain pitch.

The pouch sheet may be formed through the forming device (30), and then transferred to the next process. Specifically, a surface treatment process of the pouch sheet may be performed after the forming process.

The surface treatment step (S30) may be referred to as a process for irradiating the surface of the pouch with plasma to form a surface modification. As disclosed in the prior art, direct plasma surface treatment or indirect plasma surface treatment may be performed.

A plasma device (40) may be provided for plasma surface treatment, and it is preferable that the plasma device (40) is provided on the path along which the pouch sheet is transported.

In the transfer step (S10), the transfer and stop of the pouch sheet are repeated. In this instance, to increase the efficiency of manufacturing the pouch sheet, the transfer speed of the pouch sheet is very fast. Therefore, to perform plasma surface treatment with an appropriate intensity, a very large-capacity plasma surface treatment device (40) is required. This is because the faster the transport speed of the pouch sheet, the shorter the time of exposure to plasma. In addition, it is inefficient to perform plasma treatment while the pouch sheet is transferred. This is because plasma treatment is performed on the entire pouch sheet, and plasma treatment may also be performed on unnecessary parts. Therefore, it is not easy to selectively perform plasma treatment only on specific parts that require plasma treatment.

According to one example of the present invention, the plasma surface treatment process may be linked to the pouch forming process so that the surface treatment process is performed during the forming process. Of course, the forming process may be performed during the surface treatment process. Particularly, the surface treatment of the pouch sheet in a stopped state may be performed at the same time point by utilizing the time point when the transfer of the pouch sheet is stopped for the forming process.

Specifically, the forming process is performed on the pouch sheet in a stopped state after being transferred through the transfer step using a forming device. Then, the surface treatment process is performed on the pouch sheet in a stopped state after being transferred through the transfer step using a plasma device. The forming process and the surface treatment process may be performed at different locations. That is, the forming device and the plasma device may be distinguished from each other.

Since the plasma surface treatment process is performed on the pouch sheet in a stopped state, the plasma surface treatment may be accurately performed only on a specific portion. Therefore, the efficiency of the plasma surface treatment may be increased.

As shown in Figure 4, a plasma device (40) may be provided at the rear end of the forming device (30). That is, the forming device (30) and the plasma device (40) may be provided on a path where the pouch sheet is transferred, and the pouch sheet (2) on which the forming process has been completed may be supplied to the plasma device (40) and subjected to surface treatment. In this instance, it is preferable that the transfer and stop of the pouch sheet are performed simultaneously at all positions along the pouch sheet movement path. That is, the pouch sheet repeats moving and stopping continuously from the movement start position of the pouch sheet (as one example, the unwinder (20)) to the movement end position (as one example, the feeding device (60)).

The plasma device (40) may comprise a plasma head (46) and a guide block (47).

An alternating source is be applied between the plasma head (46) and the guide block (47), whereby plasma may be ignited therebetween to generate plasma. Local surface treatment may be performed on the pouch surface through this plasma. This plasma surface treatment may be called direct plasma surface treatment.

The plasma ignition may be performed in a separate region, and plasma gas may be supplied to the pouch surface through the plasma head (46), and the guide block (47) may perform the function of supporting the pouch. This plasma surface treatment may be called indirect plasma surface treatment.

In both the direct plasma surface treatment and the indirect plasma surface treatment, the guide block (47) may perform the function of supporting the pouch sheet to be surface-treated, and the plasma surface treatment may be performed on a specific portion of the pouch sheet supported by the guide block (47). Ultimately, the guide block (47) may be referred to as a constitution for specifying a region where plasma surface treatment is performed.

As shown in Figure 4, while the pouch sheet (2) is moved, the pouch sheet (2) is in a state separated from the forming device (30) and the plasma device (40). That is, in the forming device (30) and the plasma device (40), the detailed components may be positioned so as not to interfere with the movement of the pouch sheet (2).

As shown in Figure 5, in a state where the pouch sheet (2) is stopped, the forming device (30) may perform the forming process and the plasma device (40) may perform the surface treatment process.

Then, if the forming process, the surface treatment process, and the cutting process are completed, as shown in Figure 6, the forming device, the plasma device, and the cutting device may return to the original position, and the pouch sheet may be transferred by 1 pitch, and then stopped again.

The forming process may comprise a process in which at least one of the upper mold (31) and the lower mold (32) moves to form a cup, and the upper mold (31) and the lower mold (32) return to their original positions. Therefore, the period from the movement start of the mold until its return to the original position may be referred to as a forming period.

Therefore, the pouch sheet (2) before the forming process has only a horizontal plane (2a), and after the forming process, it has the horizontal plane (2a) maintained at both ends in the width direction of the pouch sheet (2), and has a state recessed by the cups (12A, 12B) in the central portion.

Similarly, the surface treatment process may comprise a process in which the plasma head (46) and the guide block (47) move to perform plasma surface treatment, and the plasma head (46) and the guide block (47) return to their original positions. Therefore, the period from the movement start of the plasma device (40) until its return to the original position may be referred to as a surface treatment period.

Here, the forming period and the surface treatment period may be the same, and any period may be somewhat longer than the other period. Therefore, the stopping period of the pouch sheet (2) may be determined according to the long period.

Thereafter, the pouch sheet (2) on which the forming process and the surface treatment process are completed may be cut into unit pouches (10). The cutting of the pouch sheet (2) may be performed through a cutting device (50). That is, the cutting process or cutting step (S50) may be performed through the cutting device. The cutting device (50) may comprise an upper cutter (51) and a lower cutter (52). The upper cutter and the lower cutter may approach the pouch sheet to cut the pouch sheet, and may move away from the pouch sheet so as not to interfere with the transfer of the pouch sheet after cutting.

When the pouch sheet (2) is cut into the unit pouch (10), the pouch sheet (2) is no longer in a continuous state. Therefore, to cut the pouch sheet (2), the pouch sheet (2) must be fixed. In addition, the cut pouch must be transferred. To this end, a feeding device (60) may be provided.

The feeding device (60) may support the pouch sheet (2) on both sides of the cutting position of the pouch sheet (2), and perform a function of pulling the pouch sheet (2) after cutting is completed to move the pouch sheet (2) to the cutting position. That is, the matter that the pouch sheet (2) is moved by pulling the pouch sheet (2) may be performed in synchronization with the matter that the pouch sheet (2) is transferred through the unwinder (20).

The feeding device (60) may comprise a gripper (65) holding both ends of the pouch sheet (2), that is, a horizontal plane (2a), and a main body (62) provided with the gripper. The main body (62) may be provided to reciprocate back and forth by the length of the unit pouch, and the main body (62) may be moved along a guide (61) provided with a guide rail.

Therefore, the cutting step (S50) may be performed after the feeding step (S40) has been performed. Of course, depending on the viewpoint, it can also be said that the feeding step (S40) is performed after the cutting step (S50) has been performed.

Details on the feeding device (60) and the cutting device (50) will be described below.

In Figures 4 and 6, one example is illustrated, in which the pouch sheet (2) is transferred on the same plane, and the forming process and the surface treatment process are performed in a state where the pouch sheet (2) is horizontal. In this case, the forming device (30) and the plasma device (40) move in the vertical direction of the pouch sheet (2), whereby forming and surface treatment may be performed. That is, they move in the up-and-down direction, whereby forming and surface treatment may be performed.

Contrary to what is illustrated, the pouch sheet (2) may be transferred while forming multiple planes rather than the same plane. In this case, the pouch sheet (2) may be transferred in a state of being bent in the vertical direction, and then transferred in the horizontal direction again. In this case, the forming device (30) and the plasma device (40) move in the vertical direction of the pouch sheet (2), whereby forming and surface treatment may be performed. That is, they move in the left and right directions, whereby forming and surface treatment may be performed.

Meanwhile, in Figures 2, and 4 to 6, one example is illustrated, in which the surface treatment step is performed after the forming step has been performed. According to the present example, as illustrated in Figure 3, the forming step may be performed after the surface treatment step has been performed. That is, the positions of the forming device and the plasma device may be switched.

After the cup forming is performed, the sealing region in the pouch sheet may be visibly distinguished. That is, the sealing region may be distinguished as a cup periphery region. This is because the sealing region may be defined relatively based on the cup.

The movement of the pouch sheet may be performed by the length of the unit pouch, and then stopped. Therefore, even before the cup forming is performed, the cup forming region and its periphery region in the pouch sheet may be preset. This is because the moving and stopping of the pouch sheet may be repeated by a certain length. Therefore, the forming step may be performed only after the plasma surface treatment is performed in some regions.

Meanwhile, based on the unit pouch (10), the side sealing may be performed in both sealing regions (11c, 11d) in the width direction, and the top sealing may be performed in both sealing regions (11a, 11b) in the length direction.

The sealing region is a region having relatively a narrow width and a long length. Then, the sealing regions are formed on both sides with the cups (12A, 12B) placed therebetween. Therefore, it is not easy to surface-treat both sealing regions with one plasma head.

Therefore, it is preferable to surface-treat both sealing regions in the side sealing or to surface-treat both sealing regions in the top sealing through one plasma device (40). Of course, one plasma device (40) may be equipped with two plasma heads (46).

In Figures 4 to 6, a plasma device (40) for surface-treating both sealing regions in the top sealing is illustrated. However, by rotating the plasma device (40) by 180 degrees, a plasma device for surface-treating both sealing regions in the side sealing may be implemented.

Therefore, two plasma devices (40) are disposed in series, whereby the sealing regions in the top sealing can be surface-treated, and then the sealing region in the side sealing can be surface-treated. Of course, the sealing regions in the side sealing can be surface-treated, and then the sealing regions in the top sealing can be surface-treated. That is, the surface-treating step (S30) may comprise a first surface-treating step (S31) and a second surface-treating step (S32).

The details of the plasma device (40) will be described below.

In conclusion, according to the present example, forming may be performed after surface treatment, or surface treatment may be performed after forming. In addition, the surface treatment may be performed through multiple stages. In any case, it is preferable that they are performed on a path where the pouch sheet is continuously transferred and stopped.

In addition, the forming process, the surface treatment process, and the cutting process may be performed in a state where the pouch sheet is stopped, and the forming process, the surface treatment process, and the cutting process may be performed simultaneously at different locations.

As shown in Figure 7, the pouch sheet may be cut into unit pouches by the cutting device (50) and the feeding device (60), and the unit pouches may be transferred to a subsequent process.

The main body (62) of the feeding device (60) may be provided to reciprocate in units of one pitch, and the main body (62) may reciprocate along the guide (61). A gripper (65) may be provided on the main body (62) of the feeding device (60). The main body (62), the guide (61), and the gripper (65) may be provided as one pair on both sides of the pouch sheet (2).

The gripper (65) may transfer the pouch sheet by pulling it by one pitch in a state of holding both ends of the pouch sheet (2) before cutting. Thereafter, in a state where the gripper (65) holds the pouch sheet (2), the pouch sheet may be supported and the pouch sheet may be cut through the cutting device (50). At this time, a continuous pouch sheet is still positioned at the front end of the cutting device (50), and a unit pouch manufactured after cutting is positioned at the rear end. The unit pouch may be transferred to a subsequent process, as one example, an assembly process, through a transfer device such as a conveyor.

After the unit pouch is formed by cutting, the gripper (65) no longer holds the unit pouch, but returns to the original position to grip the pouch sheet.

The gripper (65) may comprise an upper gripper (63) and a lower gripper (64), and perform a grip function while repeating the gap between both grippers to be narrowed and widened. The feeding function may be performed through forward and backward reciprocation of the gripper.

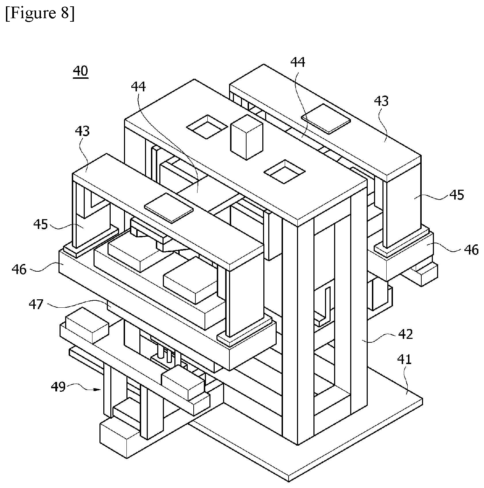

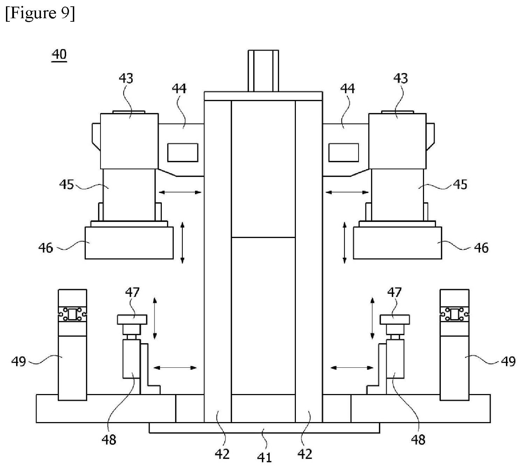

As shown in Figures 8 and 9, the plasma device (40) may comprise a base (41) and a main body (42). A plasma head (46) and a guide block (47) may be provided on the left and right sides of the main body (42), respectively. That is, a pair of plasma heads on the left and right and a pair of guide blocks on the left and right may be provided.

The plasma head (46) may be provided to irradiate one surface (as one example, the upper surface) of the pouch sheet with plasma gas, and the guide block (47) may be provided to support the other surface (as one example, the lower surface) of the pouch sheet.

The gap between the plasma head (46) and the guide block (47) may be formed so that it is repeatedly narrowed and widened. That is, upon plasma irradiation, the plasma head (46) may be positioned to approach the upper surface of the pouch sheet, and the guide block (47) may be positioned to support the lower surface of the pouch sheet. Thereafter, if the plasma irradiation is completed, the plasma head and the guide block may move vertically, thereby being positioned to be away from the pouch sheet. In such a state, the pouch sheet may move 1 pitch again.

The guide block (47) may be provided to move up and down through a piston (48), and the plasma head (46) may also be provided to move up and down through the piston (45).

The gap between the plasma head (46) and the plasma head (46), and the gap between the guide block (47) and the guide block (47) may be preset, and such a gap may be set according to the size of the cups (12A, 12B). This is because if the size and shape of the cup are determined, the region to be subjected to plasma surface treatment is determined accordingly.

When the width of the pouch sheet is changed or the size of the cup is changed, the gap may be varied to flexibly cope with this. That is, a separation distance between the plasma head (46) and the guide block (47) with respect to the main body (42) may be adjusted. To this end, the plasma head (46) may be coupled to the main body (42) through a support bracket (43) and a connection bracket (44). The gap between the plasma heads may be adjusted by adjusting the gap between the support bracket (43) and the main body (42) through the connection bracket (44).

Similarly, the distance between the guide block (47) and the guide block (47) may also be adjusted. Particularly, the upper plasma head (46) and the lower guide block (47) may be provided to face each other, and one horizontal movement may be interlocked with the horizontal movement.

The region where the plasma is irradiated may have a narrow width and a long length. The width of the plasma irradiation region may be determined to correspond to the width that the heat fusion is performed, and the length of the plasma irradiation region may be determined to correspond to the length that the heat fusion is performed. As the cup size varies, the width of the heat fusion does not vary greatly, but the length of the heat fusion may vary greatly. Therefore, the region where the plasma is irradiated may have a long rectangular shape.

The plasma irradiation intensity which can be generated by one plasma device (40) is limited. Therefore, one plasma device (40) may perform plasma surface treatment in the regions of the left and right or up-and-down ends of the cup, and another plasma device (40) may perform plasma surface treatment in the remaining region. In this case, another plasma device (40) may be provided in a state where it is rotated 180 degrees.

Meanwhile, it is preferable that the pouch sheet (2), which is repeatedly transferred and stopped between the unwinder (20) and the feeding device (60), does not sag downward and forms a horizontal plane. That is, it is necessary that an appropriate tension is applied to the pouch sheet.

As one example, a plurality of support rolls may be provided on the transfer path of the pouch sheet (2). The support rolls may be provided to support the entire width of the pouch sheet before forming the pouch sheet. Then, the support rolls may be provided to support only both ends of the width of the pouch sheet after forming the pouch sheet. This is because even after forming, both ends of the width of the pouch sheet still form a horizontal plane (2a).

In addition, for plasma surface treatment, it is preferable that plasma is supplied vertically to the surface of the pouch. Therefore, the pouch sheet needs to be supported on both sides to maintain a flat surface. To this end, the plasma device (40) may comprise pouch support parts (49) at both ends, respectively. Of course, the gap between the pouch support part and the pouch support part may be adjusted.

It is preferable that the pouch support parts (49) are provided to support both ends of the pouch sheet and simultaneously allow movement of the pouch sheet. That is, it is preferable that the pouch support parts (49) are provided to support only both ends of the pouch sheet so as not to interfere with the cup formed in the central portion of the pouch sheet.

Meanwhile, the plasma head and the guide block are provided to be opposed to each other. Therefore, when the plasma device is installed horizontally, the plasma head and the guide block move up and down in the vertical direction. To adjust the position of the plasma surface treatment, the plasma head and the guide block may be provided to be movable in the horizontal direction. In this instance, it is preferable that the horizontal movement of the plasma head and the horizontal movement of the guide block interlock. This is because it is preferable to accurately maintain both opposing relationship.

### Industrial Applicability

It is described in the Detailed Description of Invention.

## Claims

1. A secondary battery pouch manufacturing method comprising:
a transfer step of supplying a pouch sheet by transferring and stopping it from a pouch roll at a predetermined cycle using an unwinder;
a forming step of forming a cup, in which an electrode assembly is accommodated, by forming the pouch sheet in a stopped state after being transferred through the transfer step; and
a surface treatment step of performing plasma surface treatment on the pouch sheet in a stopped state after being transferred through the transfer step.

2. The secondary battery pouch manufacturing method according to claim 1, **characterized in that**
the forming step is performed on the pouch sheet on which the surface treatment step has been performed.

3. The secondary battery pouch manufacturing method according to claim 1, **characterized in that**
the surface treatment step is performed on the pouch sheet on which the forming step has been performed.

4. The secondary battery pouch manufacturing method according to claim 1, **characterized in that**
the plasma surface treatment is performed through a plasma device comprising a plasma head and a guide block which supports the pouch sheet and faces the plasma head, and
the plasma surface treatment is performed in a state where an outside region (sealing region) near the edge of the cup is supported by the guide block.

5. The secondary battery pouch manufacturing method according to claim 4, **characterized in that**
the plasma surface treatment is performed only on an upper or lower surface of the pouch sheet covered and being in contact with each other upon sealing of the pouch.

6. The secondary battery pouch manufacturing method according to claim 5, **characterized in that**
the plasma surface treatment is also performed on an inside region (temporary bonding region) near the edge of the cup.

7. The secondary battery pouch manufacturing method according to any one of claims 1 to 6, **characterized in that**
in the forming step, two cups are formed side by side in the width direction of the pouch sheet, and the cup is formed in a rectangular shape having short sides in the width direction of the pouch sheet and long sides in the length direction of the pouch sheet.

8. The secondary battery pouch manufacturing method according to claim 7, **characterized in that**
the plasma surface treatment is performed on at least one of an edge outside region of the short side and an edge outside region of the long side.

9. The secondary battery pouch manufacturing method according to any one of claims 1 to 6, **characterized in that**
after the surface treatment step, a cutting step of cutting the pouch sheet in a stopped state after being transferred through the transfer step into unit pouches is included.

10. The secondary battery pouch manufacturing method according to claim 9, **characterized in that**
the forming step, the surface treatment step, and the cutting step are performed simultaneously in a state where the transfer of the pouch sheet is stopped.

11. A secondary battery pouch manufacturing device, **characterized by** comprising:
an unwinder providing a pouch sheet from a pouch roll by transferring and stopping it at a predetermined cycle;
a forming device forming a cup in which an electrode assembly is accommodated by forming the pouch sheet in a stopped state; and
a plasma device performing surface treatment by irradiating the pouch sheet in a stopped state with plasma.

12. The secondary battery pouch manufacturing device according to claim 11, **characterized in that**
the forming device and the plasma device are located at the rear end of the unwinder, and the forming device is located at the front or rear end of the plasma device.

13. The secondary battery pouch manufacturing device according to claim 12, **characterized in that**
the plasma device comprises:
a plasma head irradiating plasma toward one surface of the pouch sheet; and
a guide block provided to support the other surface of the pouch sheet upon the plasma irradiation and to be spaced apart from the other surface of the pouch sheet upon completion of the plasma irradiation.

14. The secondary battery pouch manufacturing device according to claim 13, **characterized in that**
the plasma head and the guide block form one pair, and two pairs of the plasma heads and the guide blocks which are spaced apart from each other in the length direction or width direction of the pouch sheet are provided.

15. The secondary battery pouch manufacturing device according to any one of claims 11 to 14, **characterized in that**
a cutting device cutting the pouch sheet, on which the cup is formed and the surface treatment is performed, into unit pouches is included.

16. The secondary battery pouch manufacturing device according to claim 15, **characterized in that**
the forming device, the plasma device, and the cutting device are operated at different positions in a stopped state of the pouch sheet.

17. The secondary battery pouch manufacturing device according to claim 15, **characterized in that**
a feeding device supporting the pouch sheet upon cutting of the pouch sheet through the cutting device and moving the pouch sheet to a cutting position of the cutting device upon cutting completion is included.

18. A secondary battery pouch plasma device, **characterized by** comprising:
plasma heads provided on one side and the other side of the upper portion of the pouch sheet, respectively, to irradiate the surface of the pouch sheet with plasma; and
guide blocks provided on one side and the other side of the lower portion of the pouch sheet, respectively, and provided to face the plasma heads, wherein
the guide block is positioned to be spaced apart from the lower surface of the pouch sheet upon transfer of the pouch sheet, and is provided to support the lower surface of the pouch sheet by rising upon stopping of the pouch sheet, and
the plasma head irradiates the upper surface of the pouch sheet with plasma in a state where the guide block supports the lower surface of the pouch sheet.

19. The secondary battery pouch plasma device according to claim 18, **characterized in that**
the plasma head approaches the lower surface of the pouch sheet by descending upon stopping of the pouch sheet.

20. The secondary battery pouch plasma device according to claim 18, **characterized in that**
the gap between the plasma heads and the gap between the guide blocks are adjustable.
